# EUROPEAN PATENT APPLICATION

(11) **EP 3 640 718 A1**
(43) Date of publication of application: **22.04.2020**
(21) Application number: 18759539.2
(22) Date of filing: 11.02.2018
(51) Int. Cl.: G02F 1/1335

(54) **REFLECTIVE LIQUID CRYSTAL DISPLAY PANEL AND DISPLAY DEVICE**

(30) Priority: 16.06.2017 CN 201710458594
(71) Applicant: BOE Technology Group Co., Ltd., Beijing 100015 (CN)
(72) Inventor: ZHU, Ming, Beijing 100176 (CN); ZHANG, Shiyu, Beijing 100176 (CN); WANG, Yingtao, Beijing 100176 (CN); WANG, Meili, Beijing 100176 (CN)
(74) Representative: Potter Clarkson
(86) International application number: PCT/CN2018/076299
(87) International publication number: WO 2018/227990

(57) **Abstract**

A reflective liquid crystal display panel includes an array substrate, an opposite substrate, a liquid crystal layer, an absorptive polarizer, a plurality of pixel electrodes, a reflective polarized structure, and a plurality of light conversion structures. The opposite substrate is disposed opposite to the array substrate; the liquid crystal layer is located between the opposite substrate and the array substrate; the absorptive polarizer is located at a surface of the liquid crystal layer away from the array substrate, and the absorptive polarizer has a light transmission axis; the plurality of pixel electrodes are located at a surface of the array substrate facing the liquid crystal layer; the reflective polarized structure is located between the pixel electrode and the array substrate, the reflective polarized structure has a light reflection axis, and the light reflection axis and the light transmission axis are parallel or perpendicular to each other; the plurality of light conversion structures are located at a surface of the reflective polarized structure facing away from pixel electrodes, the light conversion structure is in one-to-one correspondence with the pixel electrode, and the light conversion structure is configured to convert incident light into light of a color corresponding to a pixel unit in which the pixel electrode is located.

## Description

### CROSS-REFERENCE TO RELATED APPLICATIONS

The present application is based on and claims priority to Chinese Patent Application No. 201710458594.4, filed on June 16, 2017, the entire contents thereof are incorporated herein by reference.

### TECHNICAL FIELD

The present disclosure relates to the field of display technology, and in particular, to a reflective liquid crystal display panel and a display device.

### BACKGROUND

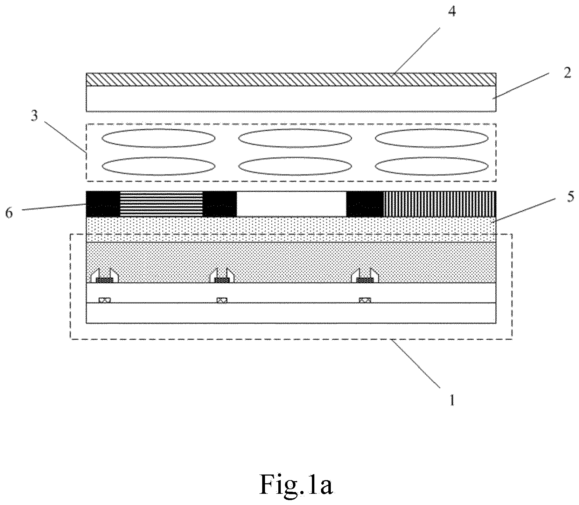

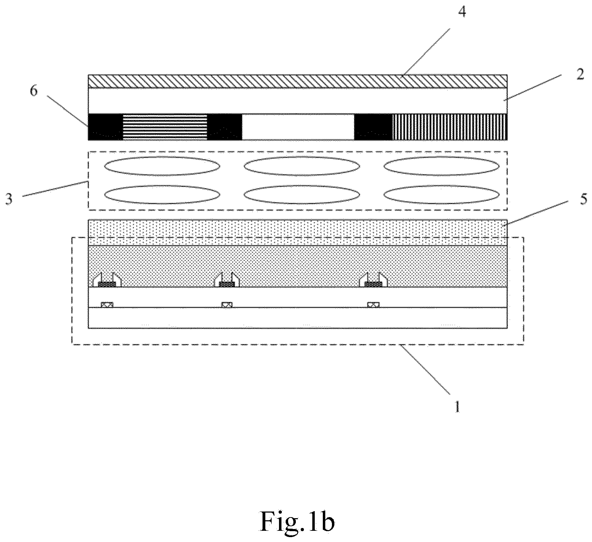

A reflective liquid crystal display is a liquid crystal display which uses ambient light as a light source to realize an image display. The specific structure of the reflective liquid crystal display panel as shown in FIG. 1a and FIG. 1b includes an array substrate 1 and an opposite substrate 2 disposed opposite to each other, a liquid crystal layer 3 disposed between the array substrate 1 and the opposite substrate 2, an absorptive polarizer 4 located at a surface of the liquid crystal layer 3 away from the array substrate 1, a reflective electrode 5 disposed at a surface of the array substrate 1 facing the liquid crystal layer 3, a absorptive color film layer 6 disposed at a surface of the opposite substrate 2 facing the liquid crystal layer 3 or disposed at a surface of the reflective electrode 5 facing the liquid crystal layer 3; wherein the reflective electrode 5 is capable of reflecting incident light back to the liquid crystal layer 3, while the absorptive color film layer 6 can reflect a specific color by absorbing light of other wavelengths to realize the display of a color image.

When ambient light is sufficient, the reflective liquid crystal display can realize the display function; while in the case of insufficient ambient light or dark room, light utilization rate is very low, which seriously affects the display effect of the screen.

### SUMMARY

An embodiment of the present disclosure provide a reflective liquid crystal display panel, which includes an array substrate, an opposite substrate, a liquid crystal layer, an absorptive polarizer, a plurality of pixel electrodes, a reflective polarized structure, and a plurality of light conversion structures. The opposite substrate is disposed opposite to the array substrate; the liquid crystal layer is located between the opposite substrate and the array substrate; the absorptive polarizer is located at a surface of the liquid crystal layer away from the array substrate, and the absorptive polarizer has a light transmission axis; the plurality of pixel electrodes are located at a surface of the array substrate facing the liquid crystal layer; the reflective polarized structure is located between the pixel electrode and the array substrate, the reflective polarized structure has a light reflection axis, and the light reflection axis and the light transmission axis are parallel or perpendicular to each other; the plurality of light conversion structures are located at a surface of the reflective polarized structure facing away from pixel electrodes, the light conversion structure is in one-to-one correspondence with the pixel electrode, and the light conversion structure is configured to convert incident light into light of a color corresponding to a pixel unit in which the pixel electrode is located.

In a possible implementation manner, in the reflective liquid crystal display panel provided by the embodiment of the present disclosure, the reflective polarized structure is a metal wire grid polarized structure.

In a possible implementation manner, in the reflective liquid crystal display panel provided by the embodiment of the present disclosure, the metal wire grid polarized structure is electrically connected with the pixel electrode, and the metal wire grid polarized structure is electrically connected with a drain electrode metal in the array substrate.

In a possible implementation manner, in the reflective liquid crystal display panel provided by the embodiment of the present disclosure, the metal wire grid polarized structure and the pixel electrode are integrated.

In a possible implementation manner, in the reflective liquid crystal display panel provided by the embodiment of the present disclosure, the reflective liquid crystal display panel further includes a mirror, wherein the mirror is located at a surface of the light conversion structure facing away from the reflective polarized structure.

In a possible implementation manner, in the reflective liquid crystal display panel provided by the embodiment of the present disclosure, the mirror is located at a surface of the array substrate facing away from the opposite substrate.

In a possible implementation manner, in the reflective liquid crystal display panel provided by the embodiment of the present disclosure, the mirror is located between the array substrate and the light conversion structure.

In a possible implementation manner, in the reflective liquid crystal display panel provided by the embodiment of the present disclosure, the pixel unit in which the pixel electrode corresponding to the light conversion structure is located is light having a first frequency in a visible light waveband;
the light conversion structure includes a down-conversion material configured to convert light having a third frequency and light having a second frequency in the visible light waveband into the light having the first frequency, wherein the first frequency is less than the second frequency and the second frequency is less than the third frequency.

In a possible implementation manner, in the reflective liquid crystal display panel provided by the embodiment of the present disclosure, the pixel unit in which the pixel electrode corresponding to the light conversion structure is located is light having a third frequency in a visible light waveband; the light conversion structure includes an up-conversion material configured to convert light having a first frequency and light having a second frequency in the visible light waveband into the light having the third frequency, wherein the first frequency is less than the second frequency and the second frequency is less than the third frequency.

In a possible implementation manner, in the reflective liquid crystal display panel provided by the embodiment of the present disclosure, the pixel unit in which the pixel electrode corresponding to the light conversion structure is located is light having a second frequency in a visible light waveband;
the light conversion structure includes an up-conversion material configured to convert light having a first frequency in the visible light waveband into the light having the second frequency, and/or a down-conversion material configured to convert light having a third frequency in the visible light waveband into the light having the second frequency, wherein the first frequency is less than the second frequency and the second frequency is less than the third frequency.

In a possible implementation manner, in the reflective liquid crystal display panel provided by the embodiment of the present disclosure, the down-conversion material includes an organic small molecule light emitting material or an organic high molecular polymer light emitting material.

In a possible implementation manner, in the above reflective liquid crystal display panel provided by the embodiment of the present disclosure, the up-conversion material includes: an inorganic compound doped with rare earth ions.

In a possible implementation manner, in the reflective liquid crystal display panel provided by the embodiment of the present disclosure, the up-conversion material comprises NaYF4 as a host material, doping with materials of Yb:Tm:Er = 18∼60:0∼0.2:0∼2.

In a possible implementation manner, in the reflective liquid crystal display panel provided by the embodiment of the present disclosure, the up-conversion material comprises NaYF4 as a host material, doping with materials of Yb:Tm:Er = 20:0.2:0-0.5.

In a possible implementation manner, in the reflective liquid crystal display panel provided by the embodiment of the present disclosure, the up-conversion material is made of NaYF4 as a host material, doping with materials of Yb:Tm:Er = 18-25:0: 2.

An embodiment of the present disclosure further provides a display device, which includes the reflective liquid crystal display panel provided by the embodiment of the present disclosure.

### BRIEF DESCRIPTION OF THE DRAWINGS

FIGS. 1a and 1b are side views of a reflective liquid crystal display panel in the related art, respectively;
FIGS. 2 to 5 are side views of a reflective liquid crystal display panel in an embodiment of the present disclosure, respectively;
FIG. 6 is a schematic view of the working principle when a normally white mode display panel is in a normally white mode according to an embodiment of the present disclosure;
FIG. 7 is a schematic view of the working principle when a normally white mode display panel is in a black state according to an embodiment of the present disclosure;
FIG. 8 is a schematic view of a working principle when a normally white mode display panel displays various gray-scale images according to an embodiment of the present disclosure;
FIG. 9 is a top plan view of a light conversion structure in an embodiment of the present disclosure.

### DETAILED DESCRIPTION

Specific embodiments of a reflective liquid crystal display panel and a display device according to an embodiment of the present disclosure will be described in detail below with reference to the accompanying drawings. It should be noted that the described embodiments are only part of the embodiments of the present disclosure, and not all of the embodiments. All other embodiments obtained by those ordinary skilled in the art without any creative work according to the embodiments of the present disclosure belong to the scope protected by the present disclosure.

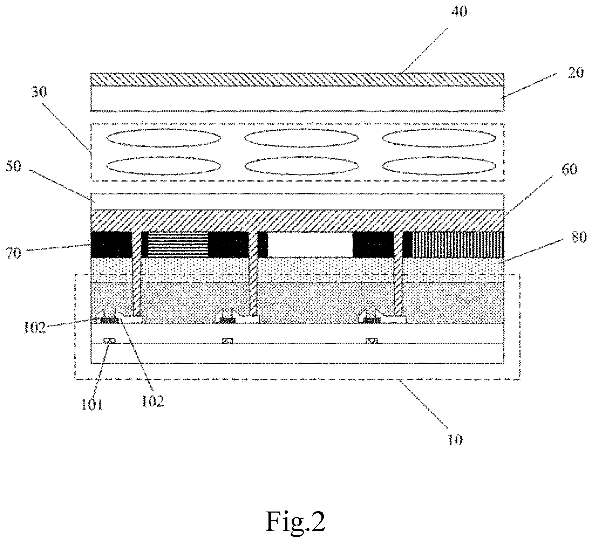

An embodiment of the present disclosure provides a reflective liquid crystal display panel, as shown in FIG. 2 to FIG. 5, which may include an array substrate 10 and an opposite substrate 20 disposed opposite to each other, a liquid crystal layer 30 between the opposite substrate 20 and the array substrate 10, an absorptive polarizer 40 located at a surface of the liquid crystal layer 30 away from the array substrate 10, a plurality of pixel electrodes 50 located at a surface of the array substrate 10 facing the liquid crystal layer 30, a reflective polarized structure 60 located between the pixel electrode 50 and the array substrate 10, and a plurality of light conversion structures 70 located at a surface of the reflective polarized structure 60 facing away from pixel electrodes 50.

The pixel electrode 50 is in one-to-one correspondence with the light conversion structure 70; the light conversion structure 70 is configured to convert an incident light into light of a color corresponding to the pixel unit in which the pixel electrode 50 is located.

A light reflection axis of the reflective polarized structure 60 and a light transmission axis of the absorptive polarizer 40 are parallel or perpendicular to each other.

Herein, the "surface" in the present disclosure includes an inner part of the surface, a face of the surface, and a space above the surface.

According to the reflective liquid crystal display panel provided by the embodiment of the present disclosure, the incident light may be converted into light of color corresponding to the pixel unit in which the pixel electrode is located by arrangement of the light conversion structure. Compared with a structure that emits light by only reflecting light of a specific wavelength in the related art, the utilization ratio of light is increased. In addition, in combination with the arrangement of the reflective polarized structure, the light emitted by the light conversion structure is selected by polarization of the reflective polarized structure and then enters the liquid crystal layer, thereby effectively avoiding the problem that an image cannot be normally displayed due to change in a light polarization state caused by the light conversion structure. It may not only ensure the normal display of the display panel, but also improve the quality of the display.

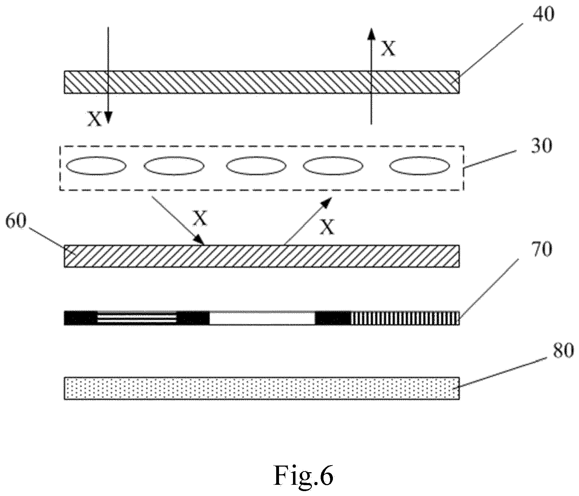

In a specific implementation, when the reflective liquid crystal display panel provided by the embodiment of the present disclosure is in a normally white mode, the light reflection axis of the reflective polarized structure and the light transmission axis of the absorptive polarizer are disposed to be parallel to each other. As shown in the schematic view of FIG. 6, if the light transmission axis of the absorptive polarizer 40 is in the X-direction, only the light having a polarization direction in the X-direction may pass through the absorptive polarizer 40. When the polarized light in the X-direction enters on a surface of the reflective polarized structure 60 through the liquid crystal layer 30, the polarization direction of the light is still in X-direction as the liquid crystal does not have optical activity. The polarized light in the X-direction entering on the surface of the reflective polarized structure 60 is totally reflected, and then passes through the liquid crystal layer 30. After that, the polarized light is still in the X-direction and is emitted out of the display panel through the absorptive polarizer 40 to form a normally white mode.

In this embodiment, the reflective liquid crystal display panel may further include a mirror 80 located at a surface of the light conversion structure 70 facing away from the reflective polarized structure 60.

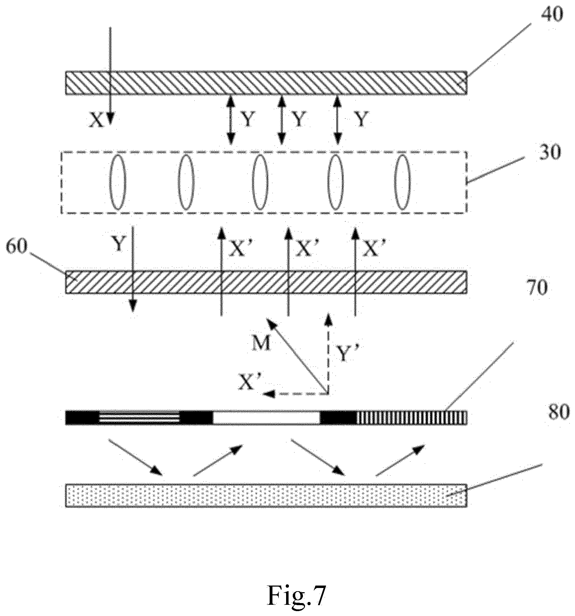

Specifically, when it is required to display the black state by using a normally white mode display panel, light may be rotated by 90° after passing through the liquid crystal layer by controlling the voltage; for example, as shown in FIG. 7, after passing through the liquid crystal layer 30, the polarization direction of the polarized light in the X-direction passing through the absorptive polarizer 40 is transmitted into a Y-direction perpendicular to the X-direction. Then, all of the polarized light further passes through the reflective polarized structure 60 and enters the light conversion structure 70 to excite the polarized light in the M-direction which enters on the reflective polarized structure 60 by reflection of the mirror 80. A polarized light X' of the X-direction component in the polarized light in the M-direction passes through the reflective polarized structure 60 and then enters the liquid crystal layer 30, and then becomes a polarized light in the Y-direction by polarization of the liquid crystal layer 30, so that it is absorbed by the absorptive polarizer 40 (as indicated by a double arrow) to be displayed as a black state.

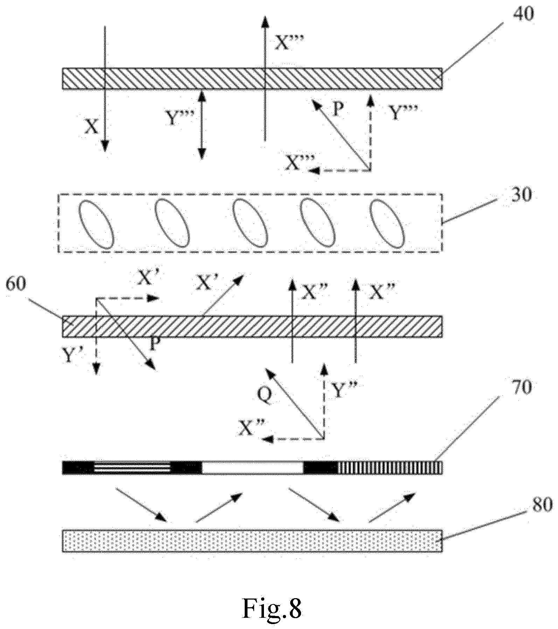

Specifically, when it is necessary to display various gray-scale images by using the normally white mode display panel, a deflection direction of the liquid crystal is controlled by controlling voltage; for example, as shown in FIG. 8, after passing through the liquid crystal layer 30, the polarization direction of the polarized light in the X-direction passing through the absorption-type polarizer 40 is transmitted into a P-direction; wherein a polarized light X' of the X-direction component in the polarized light of the P-direction is reflected into the liquid crystal layer 30 by the reflective polarized structure 60, and a polarized light Y' of the Y-direction component in the polarized light of the P-direction enters the light conversion structure 70 through the reflective polarized structure 60 to excite a polarized light in the Q-direction which enters the reflective polarized structure 60 by reflection of the mirror 80. A polarized light X" of the X-direction component in the polarized light of the Q-direction enters the liquid crystal layer 30 through the reflective polarized structure 60; after the deflection of the liquid crystal layer 30, the component polarized light X' and the component polarized light X" are changed into the polarized light in the P-direction, so that the polarized light X'" of the X-direction component in the polarized light in the P-direction exits through the absorption-type polarizer 40, and the polarized light Y'" of the Y-direction component is absorbed by the absorption-type polarizer 40 (as indicated by the double arrow). Depending on different colors of the light excited by various light conversion structures 70, a final image is formed after color mixture, the display function is achieved.

Specifically, when the reflective liquid crystal display panel provided by the embodiment of the present disclosure is in the normally black mode, it is necessary to arrange the light reflection axis of the reflective polarized structure and the light transmission axis of the absorption polarizer to be perpendicular to each other. In the normally black mode, the display principle of the white state and the various gray-scale images is similar to that of the normally white mode display panel. Details thereof may refer to the embodiment of the normally white mode display panel, and will not be repeated herein.

In a specific implementation, in order to realize the function of the reflective polarized structure, the light emitted from the light conversion structure is selected by polarization and then enters the liquid crystal layer. In the reflective liquid crystal display panel provided by the embodiment of the present disclosure, the reflective polarized structure is generally a metal wire grid polarized structure.

Specifically, the pixel electrode disposed on the surface of the metal wire grid polarized structure facing the liquid crystal layer is usually a transparent conductive material such as ITO; and the pixel electrode needs to be electrically connected with a drain electrode metal in the array substrate to facilitate providing a driving signal for the pixel electrode. However, in the structure shown in FIGS. 2 to 5, since the pixel electrode 50 and the drain electrode metal 102 in the array substrate 10 are separated by a plurality of film layers having a large thickness, and it is difficult to provide via holes between the pixel electrode 50 and the drain electrode metal 102, in the reflective liquid crystal display panel provided by the embodiment of the present disclosure, the metal wire grid polarized structure is electrically connected with the pixel electrode 50; compared to providing the via hole between the pixel electrode 50 and the drain electrode metal 102, electrically connecting the metal wire grid polarized structure and the drain electrode metal 102 through the via hole may not only reduce the manufacturing difficulty, but also effectively avoid poor contact between the pixel electrode 50 and the drain electrode metal 102, which affects the display effect, due to the difficulty in making the via hole.

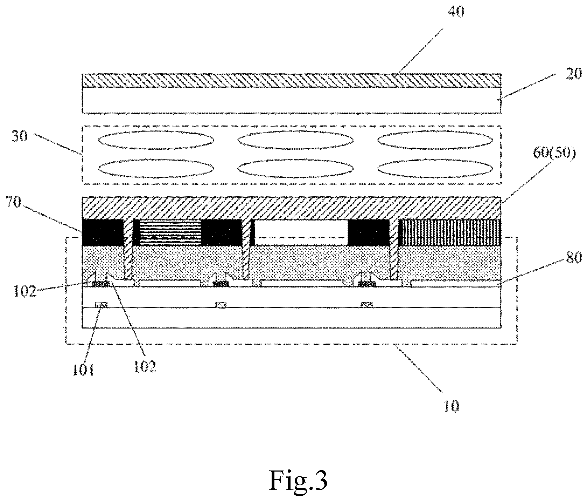

Specifically, since the metal wire grid polarized structure made of metal material, in the reflective liquid crystal display panel provided by the embodiment of the present disclosure, the metal wire grid polarized structure and the pixel electrode can be integrated into a single structure, that is, the metal wire grid polarized structure is also used as a pixel electrode, as shown in the left oblique line filling region shown in FIG. 3, the reflective polarized structure 60 composed of the metal wire grid polarized structure and the pixel electrode 50 are integrated, which simplifies the manufacturing process and saves the manufacturing cost.

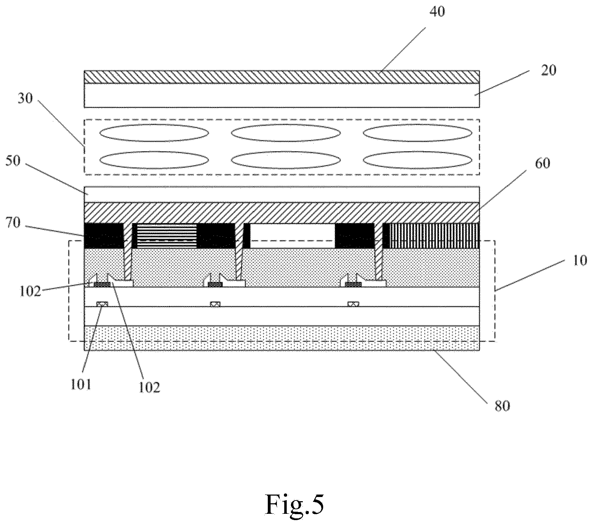

In a specific implementation, the mirror functions to reflect all incident light entering the mirror to the light conversion structure, so as to improve utilization ratio of the light, and to improve display brightness of the reflective liquid crystal display panel; therefore, in the reflective liquid crystal display panel provided by the embodiment of the present disclosure, as shown in FIG. 5, the mirror 80 may be located at a side of the array substrate 10 facing away from the opposite substrate 20; of course, as shown in FIG. 2 to FIG. 4, the mirror 80 may be located between the array substrate 10 and the light conversion structure 70.

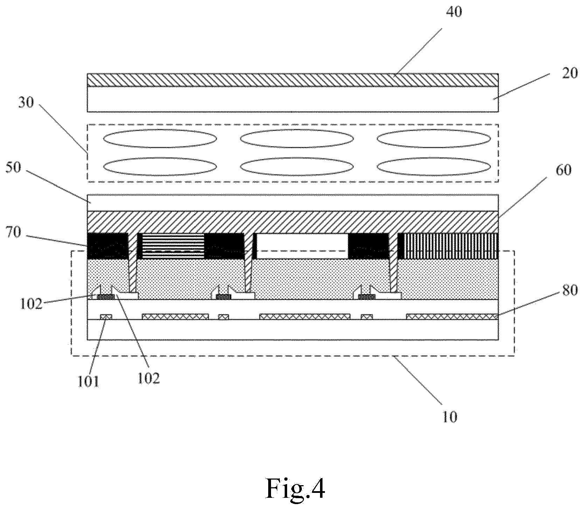

Specifically, in the reflective liquid crystal display panel provided by the embodiment of the present disclosure, when the mirror 80 is located between the array substrate 10 and the light conversion structure 70, it can be seen from FIG. 2; Of course, it can be seen from FIGS. 3 and 4 that the mirror 80 may be disposed in the same layer as the source/drain electrode metal 102 in the array substrate 10 or in the same layer as the gate metal 101; that is, the source/drain electrode metal 102 and the mirror 80, or the gate metal 101 and the mirror 80 may be simultaneously obtained by one patterning process, which simplifies the manufacturing process and reduces the manufacturing cost; while the transistor in the array substrate shown in FIG. 2 to FIG. 5 is a bottom gate structure, but may also be a top gate structure, which will not be limited herein.

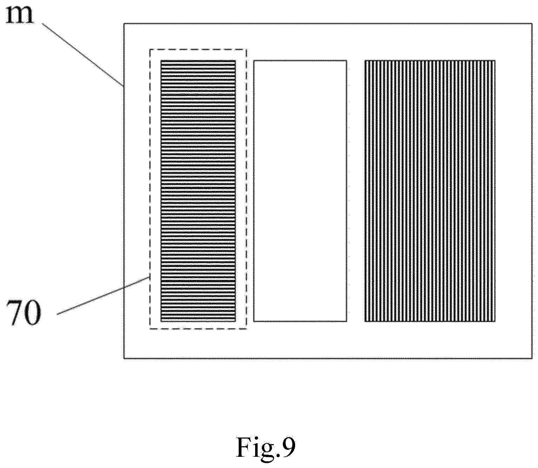

In a specific implementation, since the pixel electrodes are in one-to-one correspondence with the light conversion structure, only the light conversion structure 70 is shown in FIG. 9. Generally, the pixel unit corresponding to each pixel electrode is referred to as a sub-pixel unit. Every three sub-pixel units constitute one pixel, i.e. every three light conversion structures 70 constitute one pixel m, as shown in FIG. 9, of course, the number thereof will not be limited to three; therefore, each light conversion structure 70 is configured to convert incident light into light of a color corresponding to the pixel unit in which the pixel electrode is located. For example, when three sub-pixels included in one pixel respectively emit red light R, green light G, and blue light B, three light conversion structures 70 respectively convert the incident light into red light R, green light G, and blue light B; therefore, in order to realize that the light conversion structure is capable of converting incident light into light of a color corresponding to the pixel unit in which the pixel electrode is located so as to improve utilization ratio of the light, material of the light conversion structure is selected relative to the wavelength range of the light. The material selection of the light conversion structure will be specifically described below.

Specifically, in the reflective liquid crystal display panel provided by the embodiment of the present disclosure, when the light of the color corresponding to the pixel unit in which the pixel electrode is located is low frequency light in the visible light waveband, the material of the light conversion structure generally includes a down-conversion material for converting high frequency light and intermediate frequency light in the visible light waveband into low frequency light. Specifically, the down-conversion material may include one of or a combination of an inorganic light-emitting material and an organic light-emitting material, for example, a quantum dot material, a fluorescent material, or the like. The organic light-emitting material may be an organic small molecule light-emitting material or an organic high molecular polymer light-emitting material, which will not be limited herein. Moreover, when various down-conversion materials are selected as the light-conversion structure, various materials may be disposed in separate film layers and these film layers may be adjacent or spaced apart, or the various materials may be mixed in the same film layer, which will not be limited herein.

For example, when the light of the color corresponding to the pixel unit in which the pixel electrode is located is red light, the material of the light conversion structure is a down-conversion material for converting blue light and green light into red light. Specifically, the red color light-emitting material such as a red quantum dot or a red fluorescent material may be selected as the down-conversion material, which will not be limited herein.

Specifically, in the reflective liquid crystal display panel provided by the embodiment of the present disclosure, when the light of the color corresponding to the pixel unit where the pixel electrode is located is high frequency light in the visible light waveband, the various of the light conversion structure generally includes an up-conversion material for converting low frequency light and intermediate frequency light in the visible light waveband into high frequency light. Specifically, the up-conversion material may include an inorganic compound doped with rare earth ions. For example, depending on the high frequency light to be converted, one or more rare earth ions of respective concentrations and ratios may be doped in an inorganic compound such as fluoride, oxide, sulfur compound, oxyfluoride or halide. For example, the up-conversion material may be NaYF4, having the highest up-conversion light-emitting efficiency as a host material, doping with Yb:Tm:Er = 18∼60:0∼0.2:0∼2. Moreover, when various up-conversion materials are used as the light-conversion structure, various materials may be disposed in separate film layers and the film layers may be adjacent or spaced apart, or the various materials may be mixed in the same film layer, which will not be limited herein.

For example, when the light of the color corresponding to the pixel unit in which the pixel electrode is located is blue light, the material of the light conversion structure is an up-conversion material for converting red light and green light into blue light. Specifically, the up-conversion material may be a host material doped with a host material of Yb:Tm:Er=20:0.2:0-0.5, and the host material may be an inorganic compound such as NaYF4.

Specifically, in the reflective liquid crystal display panel provided by the embodiment of the present disclosure, when the light of the color corresponding to the pixel unit in which the pixel electrode is located is intermediate frequency light in the visible light waveband, the material of the light conversion structure generally includes an up-conversion material for converting low frequency light in the visible light waveband into intermediate frequency light, and/or a down-conversion material for converting high frequency light in the visible light waveband into intermediate frequency light. Also, in order to maximize utilization ratio of the light, the light conversion structure preferably needs to include both the up-conversion material and the down-conversion material. Specifically, the down-conversion material may include one of or a combination of the inorganic light emitting material and the organic light emitting material, for example, a quantum dot material, a fluorescent material or the like. The organic light-emitting material may be an organic small molecule light-emitting material or an organic high molecular polymer light-emitting material, which will not be limited herein. Specifically, the up-conversion material may include an inorganic compound doped with rare earth ions. For example, depending on the high frequency light to be converted, one or more rare earth ions of respective concentrations and ratios may be doped in an inorganic compound such as fluoride, oxide, sulfur compound, oxyfluoride or halide. For example, NaYF4, which has the highest up-conversion light-emitting efficiency, may be selected as the host material doping with Yb:Tm:Er = 18∼60:0∼0.2:0∼2. Moreover, when various up-conversion materials are selected as the light-conversion structure, various materials may be disposed in separate film layers and the film layers may be adjacent or spaced apart, or the various materials may be mixed in the same film layer, which will not be limited herein.

For example, when the light of the color corresponding to the pixel unit in which the pixel electrode is located is green light, the material of the light conversion structure may simultaneously include an up-conversion material for converting red light into green light and a down-conversion material for converting blue light into green light. Specifically, the down-conversion material may select a green organic light-emitting material such as a green quantum dot or a green fluorescent material, which will not be limited herein. Specifically, the up-conversion material may be a material in which the host material is doped with Yb:Tm:Er=18∼25:0:2, and the inorganic material of the host material is NaYF4.

In the reflective liquid crystal display panel provided by the embodiment of the present disclosure, in one pixel as shown in FIG. 9, in order to obtain white light, it is necessary to satisfy that: an area of the light conversion structure 70 corresponding to the blue light (vertical line filling area) is larger than an area of the light conversion structure 70 corresponding to the green light (white filling area), the area of the light conversion structure 70 corresponding to the green light (white filling area)is larger than an area of the light conversion structure 70 corresponding to the red light (horizontal line filling area); moreover, a specific area ratio is required to be set based on the actual light mixing ratio which will not be limited herein.

Based on the same disclosure concept, an embodiment of the present disclosure further provides a display device including the above reflective liquid crystal display panel provided by an embodiment of the present disclosure. The display device may be any product or element having a display function, such as a mobile phone, a tablet computer, a television, a display, a notebook computer, a digital photo frame, a navigator and the like. For the implementation of the display device, reference may be made to the embodiments of the reflective liquid crystal display panel described above, which will not be repeatedly described herein.

A reflective liquid crystal display panel and a display device provided by the embodiments of the present disclosure may convert incident light into light corresponding to a pixel unit in which a pixel electrode is located by arrangement of the light conversion structure. Compared with a structure that emits light after only reflects light of a specific wavelength in the related art, the utilization ratio of light is increased. In addition, in combination with the arrangement of the reflective polarized structure, the light emitted by the light conversion structure is selected by polarization of the reflective polarized structure and then enters the liquid crystal layer, thereby effectively avoiding the problem that an image cannot be normally displayed due to change in a light polarization state caused by the light conversion structure. It may not only ensure the normal display of the display panel, but also improve the quality of the display.

An embodiment of the present disclosure provides a reflective liquid crystal display panel and a display device. The reflective liquid crystal display panel includes: an array substrate and an opposite substrate disposed opposite to each other, a liquid crystal layer located between the opposite substrate and the array substrate, an absorption-type polarizer located at a surface of the liquid crystal layer away from the array substrate, a plurality of pixel electrodes located at a surface of the array substrate facing the liquid crystal layer, a reflective polarized structure located between the pixel electrode and the array substrate, a plurality of light conversion structures located at a surface of the reflective polarized structure facing away from pixel electrodes, and a mirror located at a surface of the light conversion structure facing away from the reflective polarized structure; the pixel electrodes are in one-to-one correspondence with the light conversion structure; the light conversion structure being configured to convert incident light into light of a color corresponding to a pixel unit in which the pixel electrode is located; the light reflection axis of the reflective polarized structure and the light transmission axis of the absorption-type polarizer are parallel or perpendicular to each other. Therefore, by arrangement of the light conversion structure, the incident light can be converted into light of a color corresponding to the pixel unit in which the pixel electrode is located, thereby increasing utilization ratio of the light. In addition, in combination with the arrangement of the reflective polarized structure, the light emitted by the light conversion structure is selected by polarization of the reflective polarized structure and then enters the liquid crystal layer, thereby effectively avoiding the problem that an image cannot be normally displayed due to change in a light polarization state caused by the light conversion structure. It may not only ensure the normal display of the display panel, but also improve the quality of the display.

It is apparent that those skilled in the art can make various modifications and variations to the embodiments of the present disclosure without departing from the spirit and scope of the present disclosure. Thus, it is intended that the present disclosure cover these modifications and variations which belong to the scope of the claims and its equivalent technical scope of the present disclosure.

## Claims

1. A reflective liquid crystal display panel comprising:
an array substrate;
an opposite substrate disposed opposite to the array substrate;
a liquid crystal layer located between the opposite substrate and the array substrate;
an absorptive polarizer located at a surface of the liquid crystal layer away from the array substrate, the absorptive polarizer having a light transmission axis;
a plurality of pixel electrodes located at a surface of the array substrate facing the liquid crystal layer;
a reflective polarized structure located between the pixel electrode and the array substrate, the reflective polarized structure having a light reflection axis, and the light reflection axis and the light transmission axis being parallel or perpendicular to each other; and
a plurality of light conversion structures located at a surface of the reflective polarized structure facing away from pixel electrodes, the light conversion structure being in one-to-one correspondence with the pixel electrode, and the light conversion structure being configured to convert incident light into light of a color corresponding to a pixel unit in which the pixel electrode is located.

2. The reflective liquid crystal display panel according to claim 1, wherein the reflective polarized structure is a metal wire grid polarized structure.

3. The reflective liquid crystal display panel according to claim 2, wherein the metal wire grid polarized structure is electrically connected with the pixel electrode, and the metal wire grid polarized structure is electrically connected with a drain electrode metal in the array substrate.

4. The reflective liquid crystal display panel according to claim 2 or claim 3, wherein the metal wire grid polarized structure and the pixel electrode are integrated.

5. The reflective liquid crystal display panel according to claim 1, wherein the reflective liquid crystal display panel further comprises a mirror located at a surface of the light conversion structure facing away from the reflective polarized structure.

6. The reflective liquid crystal display panel according to claim 5, wherein the mirror is located at a surface of the array substrate facing away from the opposite substrate.

7. The reflective liquid crystal display panel according to claim 5, wherein the mirror is located between the array substrate and the light conversion structure.

8. The reflective liquid crystal display panel according to any of claims 1-7, wherein the pixel unit in which the pixel electrode corresponding to the light conversion structure is located is light having a first frequency in a visible light waveband;
the light conversion structure includes a down-conversion material configured to convert light having a third frequency and light having a second frequency in the visible light waveband into the light having the first frequency, wherein the first frequency is less than the second frequency and the second frequency is less than the third frequency.

9. The reflective liquid crystal display panel according to any of claims 1-7, wherein the pixel unit in which the pixel electrode corresponding to the light conversion structure is located is light having a third frequency in a visible light waveband;
the light conversion structure includes an up-conversion material configured to convert light having a first frequency and light having a second frequency in the visible light waveband into the light having the third frequency, wherein the first frequency is less than the second frequency and the second frequency is less than the third frequency.

10. The reflective liquid crystal display panel according to any of claims 1-7, wherein the pixel unit in which the pixel electrode corresponding to the light conversion structure is located is light having a second frequency in a visible light waveband;
the light conversion structure includes an up-conversion material configured to convert light having a first frequency in the visible light waveband into the light having the second frequency, and/or a down-conversion material configured to convert light having a third frequency in the visible light waveband into the light having the second frequency, wherein the first frequency is less than the second frequency and the second frequency is less than the third frequency.

11. The reflective liquid crystal display panel according to claim 8 or claim 10, wherein the down-conversion material includes an organic small molecule light emitting material or an organic high molecular polymer light emitting material.

12. The reflective liquid crystal display panel according to claim 9 or claim 10, wherein the up-conversion material includes: an inorganic compound doped with rare earth ions.

13. The reflective liquid crystal display panel according to claim 12, wherein the up-conversion material comprises NaYF4 as a host material, doping with materials of Yb:Tm:Er = 18∼60:0∼0.2:0∼2.

14. The reflective liquid crystal display panel according to claim 12, wherein the up-conversion material comprises NaYF4 as a host material, doping with materials of Yb:Tm:Er = 20:0.2:0-0.5.

15. The reflective liquid crystal display panel according to claim 12, wherein the up-conversion material is made of NaYF4 as a host material, doping with materials of Yb:Tm:Er = 18-25:0: 2.

16. A display device comprising the reflective liquid crystal display panel according to any of claims 1-15.
